# EUROPÄISCHE PATENTSCHRIFT

(11) **EP 4 620 295 B1**
(45) Veröffentlichungstag und Bekanntmachung des Hinweises auf die Patenterteilung: **11.02.2026**
(21) Anmeldenummer: 24165209.8
(22) Anmeldetag: 21.03.2024
(51) Int. Cl.: A01G 9/24, A01G 31/06

(54) **VORRICHTUNG UND VERFAHREN ZUR AUFZUCHT VON PFLANZEN**
DEVICE AND METHOD FOR GROWING PLANTS
DISPOSITIF ET PROCÉDÉ DE CROISSANCE DE PLANTES

(43) Veröffentlichungstag der Anmeldung: 24.09.2025
(73) Patentinhaber: Heron Innovations Factory GmbH, 6850 Dornbirn (AT)
(72) Erfinder: Beer, Christian, 6858 Schwarzach (AT)
(74) Vertreter: Riebling, Peter

(56) Entgegenhaltungen:
- CA-A1- 3 238 031
- DE-A1- 102017 121 638
- US-A1- 2019 092 567

## Beschreibung

Die Erfindung betrifft eine Vorrichtung und ein Verfahren zur Aufzucht von Pflanzen bei einer vertikalen Landwirtschaft nach den Oberbegriffen der Ansprüche 1 und 15.

Unter dem Begriff vertikale Landwirtschaft (engl. vertical farming) wird die Kultivierung von Pflanzen in geschlossenen Räumen, auf mehreren übereinanderliegenden Etagen unter natürlichem bzw. künstlichem Licht verstanden. Bei den Pflanzen handelt es sich um Nutzpflanzen, wie beispielsweise Obst und Gemüse, welche ganzjährig angebaut und geerntet werden. Dies wird insbesondere durch eine künstliche Beleuchtung, eine Klimasteuerung und eine gesteuerte Nährstoffversorgung erreicht.

Die vertikale Landwirtschaft benötigt deutlich weniger Grundfläche, da die Pflanzen in mehrstöckigen Gebäuden (sogenannten Farmscrapers) angebaut werden, welche nahe an Ballungsgebieten der Städte sind. Dadurch werden lange Transportwege von den Anbaugebieten zu den Verbrauchern vermieden. Weitere Vorteile sind die Steigerung der Nutzpflanzenproduktion, der Schutz vor Witterungseinflüssen, ein ressourcenschonender Anbau, die Wassereinsparung durch geschlossene Wasserkreisläufe, sowie die Nutzung von erneuerbaren Energien. Auf den Einsatz von Pestiziden und Fungiziden kann aufgrund der fehlenden Umwelteinflüsse ebenfalls verzichtet werden.

Bei der Hydrokultur handelt es sich um eine Anbaumethode, bei der die Pflanzen nicht in der Erde wurzeln, sondern in Behältern, in denen sie mit einem Substrat (bspw. Kokosfaser oder Steinwolle etc.) fixiert werden. Hydroponik ist eine Form der Hydrokultur und wird zum planmäßigen Anbau von Nutzpflanzen und Zierpflanzen eingesetzt. Bei einem hydroponischen System hängen die Wurzeln der Pflanze in einem Gemisch aus Wasser und darin gelösten Nährstoffen. Die Pflanze wird in der Regel auf einer Pflanzfläche mit z.B. einem Substrat oder einem Wachstumsmedium im Pflanzenbehälter fixiert. Die Versorgung der Pflanzen mit Wasser und Nährstoffen erfolgt über ein computergesteuertes Kreislaufsystem.

Eine gute und gezielte Belichtung während des Wachstums der Pflanzen spielt eine wichtige Rolle, denn mit einer guten Belichtung lässt sich der Gemüseertrag und Pflanzenertrag maximieren und die Pflanzen bleiben gesünder. Aufgrund des hohen Energiebedarfs durch die künstliche Belichtung, wird ständig nach Lösungen gesucht, um möglichst energieeffizient die Pflanzen anzubauen.

Ein weiterer, wichtiger Faktor bei der vertikalen Landwirtschaft spielt die Automatisierung, denn die automatisierten Produktionsstätten können nicht nur den Mangel an Feldarbeitskräften ausgleichen, sondern es kann auch 24 Stunden, 7 Tage kostengünstig und ressourcenschonend auf einer geringen Grundfläche frisches Gemüse angebaut und geerntet werden. Zusätzlich bringen Mitarbeiter Verunreinigungen in das System.

Vorzugsweise werden bei der vertikalen Landwirtschaft die Pflanzen in Pflanzbehälter oder Pflanzschalen angebaut, wobei die Pflanzbehälter in vertikal übereinander angeordneten Regallagerplätzen eines Regallagers eingelagert werden. Das Regallager besteht aus Regallagerreihen und Regallagerspalten. Die dort angeordneten Pflanzbehälter befinden sich in Regallagerplätzen und liegen auf Ablagepaneelen, so dass jeder Pflanzbehälter von dem darüber und daneben angeordneten Pflanzbehälter beabstandet ist.

Die Pflanzbehälter können innerhalb des Regallagers mit einem Transportroboter bewegt werden. Derartige Transportroboter sind bereits aus dem Stand der Technik bekannt.

Mit dem Gegenstand der DE 10 2004 007 412 A1 wird ein System zum Bedienen eines Regals mit einer Kommissionieranlage offenbart, bei dem ein Regalbediengerät mit einem Hubmast und einem horizontalen Ausleger in die jeweilige Regalgasse hineingreift, um dort mit einer zugeordneten Aufnahmevorrichtung das Stückgut aus der Regalgasse zu entnehmen und dann über einen stirnseitigen Hublift nach unten zu einer Empfangsstelle zu fahren.

Die DE 10 2013 013 274 A1 offenbart einen schienengebundenen Transportroboter mit einer Ladeeinrichtung für die Aufnahme und Abladung von Transportgütern auf Lagerplätzen in Regallagern, wobei die Ladeeinrichtung aus mindestens einem in Querrichtung zur Fahrtrichtung des Transportroboters verschiebbar angetriebenen Ladearm besteht, in dem mindestens eine Hubeinrichtung angeordnet ist.

Mit der DE 10 2017 121 638 A1 wird ein schienengebundener Transportroboter offenbart, welcher in den Regalgassen eines Regallagers fährt, wobei im Regallager spalten- und reihenweise übereinander gestapelte Kisten oder anders artiges Stückgut angeordnet sind. Der Transportroboter weist ein Hebezeug auf, das in vertikaler Richtung heb- und senkbar ist und zur Aufnahme eines Ladegutes eine angetriebene Ladeplattform mit mindestens einem darauf angeordneten Längsförderer aufweist. Damit ist der Transportroboter in der Lage eine Transportkiste seitlich aus einer Lagerreihe herauszuziehen, aufzuladen und an einen anderen Ort zu verbringen.

Die EP 3 664 597 A1 offenbart ein automatisches und modulares System zur Handhabung von Pflanzschalen, welche in einer hydroponischen, aeroponischen oder aquaponischen Landwirtschaft eingesetzt werden. Das System besteht im Wesentlichen aus zwei Regalreihen zwischen welchen ein Regalbediengerät auf- und abfährt und die Pflanzschalen in die beiden gegenüberliegenden Regalfächer ein- oder auslagert.

Zusätzlich offenbaren die CA 3 238 031 A1 und die US 2019/092567 A1 weitere Vorrichtungen zur Aufzucht von Pflanzen, in welchen Pflanzbehälter von einem Transportroboter auf Schienen in Regalreihen ein und ausgelagert werden.

Die DE 10 2017 121638 A1 offenbart eine Ein- und Auslagervorrichtung, in der ein deckenseitig auf Schienen fahrbarer Roboter in der Regalgasse angeordnet und dazu eingerichtet ist, Ladegut aus- und einzulagern bzw. zu verschieben.

Aus dem Stand der Technik sind zwar Regallager für den Einsatz in der vertikalen Landwirtschaft bekannt, jedoch werden aus Kostengründen standardisierte Regallager mit gleich große Regallagerplätze eingesetzt, da diese einfach und schnell aufzubauen sind. Die gleichgroßen Regallagerplätze sind jedoch mit dem Nachteil verbunden, dass den Pflanzen während der Wachstumsphase anfangs zu viel Platz und am Ende zu wenig Platz zur Verfügung steht.

Des Weiteren weist jeder Regallagerplatz eine eigene, separate Beleuchtung auf, mit welcher gezielt der Tag-/Nacht-Rhythmus simmuliert wird. Durch die Anordnung der separaten Beleuchtungseinheiten in jedem Regallagerplatz entstehen hohe Kosten bei der Installation und während des Betriebs. Des Weiteren müssen die einzelnen Beleuchtungseinheiten gezielt angesteuert werden, wodurch ein hoher Steuerungsaufwand entsteht.

Ein weiterer Nachteil von standardisierten Regallagerplätzen besteht darin, dass die geforderte Belüftung der Pflanzen nicht ausreichend erreicht wird. Aufgabe der Erfindung ist es daher, ein automatisierbares Regallager für die vertikale Landwirtschaft bereitzustellen, welches an das Pflanzenwachstum und den Tag-/Nachtrythmus angepasst ist.

Zur Lösung der gestellten Aufgabe ist die Erfindung durch die technische Lehre des Anspruches 1 und des Anspruches 15 gekennzeichnet.

Wesentliches Merkmal der Erfindung ist, dass die Vorrichtung zur Aufzucht von Pflanzen ein Regallager mit zahlreichen Regallagerplätzen aufweist, wobei die Regallagerplätze als Tagplätze und Nachtplätze ausgebildet sind und nur die Tagplätze mindestens eine Lichtquelle aufweisen und dass die Höhe der Nachtplätze geringer als die Höhe der Tagplätze ist.

Das Regallager weist mindestens eine erste Regalreihe mit Regallagerplätzen für Pflanzbehälter (6) und mindestens eine beabstandete, zweite Regalreihe mit Regallagerplätzen für Pflanzbehälter auf, wobei zwischen den beiden Regalreihen eine Regalgasse besteht, in der deckenseitig der schienengebundene Transportroboter fahrbar angeordnet ist, welcher mit einer heb- und senkbar angetriebenen Ladeplattform und mindestens einem darauf angeordneten Längsförderer mindestens einen Pflanzbehälter die Regallagerplätze ein- oder auslagert.

Die Regallagerplätze sind als Tag- und Nachtplätzen ausgebildet, wobei die Tagplätze alle mindestens eine Lichtquelle aufweisen, während die Nachtplätze ohne Lichtquelle sind. Es gibt somit helle Regalplätze in Form von Tagplätzen und dunkle Regalplätze in Form von Nachtplätzen vorhanden.

Die Lichtquelle bei den Tagplätzen ist vorzugsweise permanent eingeschaltet. Dies hat zwei entscheidende Vorteile:
a) Die Tagplätze lassen sich deutlich einfacher Klimatisieren, da die Wärmeabgabe der Lichtquellen immer gleichbleibend ist. Es kommt insbesondere zu keinen Temperatursprüngen, welche sich üblicherweise bei einem längeren An- oder Ausschalten der Lichtquelle ergeben.
b) Es ist keine aufwändige Steuerung für die Lichtquelle notwendig, da die Lichtquelle permanent eingeschaltet bleibt.

Die Nachtplätze weisen keine Lichtquelle auf, wodurch sich die folgenden Vorteile ergeben:
a) Die Nachtplätze sind deutlich günstiger, da keine teure Lichtquelle installiert werden muss.
b) Es wird keine Energie für den Betrieb der Lichtquelle benötigt.
c) Die Nachtplätze lassen sich einfacher Klimatisieren, da es keine Lichtquellen gibt, welche Wärme abgeben.

Die Höhe der Nachtplätze ist geringer als die Höhe der Tagplätze. Die Tagplätze benötigen insbesondere für die Lichtquelle höhere Regallagerplätze, welche mit einem gewissen Abstand gegenüber den Pflanzen angeordnet sein muss. Durch die unterschiedlichen Höhen können mehr Regallagerplätze pro Regal angeordnet werden, so dass mehr Pflanzen pro Regal eingelagert werden können.

Bei einer bevorzugten Ausführungsform sind die Nachtplätze (Dunkelplätze) im unteren Bereich und alle Tagplätze (d.h. mit Lichtquelle) im oberen Bereich des Regallagers angeordnet. Da die Lichtquellen der Regallagerplätze eine gewisse Abwärme erzeugen, welche nach oben steigt, kann die Wärmeenergie gezielt für die im oberen Bereich angeordneten Pflanzen in den Tagplätzen verwendet werden. Im Gegensatz hierzu benötigen die Pflanzen während der Nachtphase eher eine geringere Temperatur, welche bei den Nachtplätzen im unteren Bereich des Regals vorliegt.

Das Regallager weist eine erste Regalreihe mit Regallagerplätzen für Pflanzbehälter und eine beabstandete, zweite Regalreihe mit Regallagerplätzen für Pflanzbehälter auf. Vorzugsweise sind die Höhen der Tagplätze und die Höhen der Nachtplätze bei beiden Regalreihen gleich.

Es ist aber auch möglich, dass sich die Höhen der Tagplätze und Nachtplätze von der ersten Regalreihe gegenüber den Höhen der Tagplätze und Nachtplätze von der zweiten Regalreihe unterscheiden. Die unterschiedlichen Höhen der Regallagerplätze von den beiden Regalreihen werden an die jeweilige Größe der Pflanzen angepasst. Am Anfang der Wachstumsphase benötigen die Pflanzen in den Pflanzbehältern nur einen geringen Platzbedarf, so dass die Pflanzen in einem Regallagerplatz mit einer geringeren Höhe einlagert sind. Im Laufe der Wachstumsphase werden die Pflanzbehälter aus dem jeweiligen Regallagerplatz entnommen und zu einem Regallagerplatz mit einer größeren Höhe eingelagert. Die unterschiedlichen Höhen bei den Tagplätzen haben einen weiteren Vorteil, denn dadurch haben die Pflanzen einen unterschiedlichen Abstand zu der jeweiligen Lichtquelle. Dies wird während des Wachstumsphase gezielt ausgenutzt, um den Abstand zwischen der Pflanze und der Lichtquelle optimal zu steuern.

Das Regallager ist vorzugsweise als Hochregallager ausgebildet. Das Hochregallager besteht mehreren Regalreihen, welche als Metallregale ausgebildet sind. Die Regalreihen sind beabstandet voneinander angeordnet und zwischen sich eine Regalgasse ausbilden. Die Metallregale weisen einzelne Regallagerplätze auf, welche für die Einlagerung von Boxen,

Behältern oder andere Systeme geeignet sind. Jeder Lagerplatz ist durch Koordinaten gekennzeichnet, welche sich aus dem Lagerbereich, der Regalgasse, der Regalreihe, der Ebene und dem Regallagerplatz ergeben.

Vorzugsweise weisen die Regallagerplätze keine Bodenplatte auf, sondern zwei beabstandete Schienen, auf welchen die Pflanzbehälter absetzbar sind. Der Abstand und die Form der Schienen ist hierbei an die Ladegabel des Transportroboters angepasst. Es ist aber auch möglich, dass die Regallagerplätze im Bodenbereich abgekantete Profile aufweisen, in welche die Ladegabeln des Teleskop-Schlitten des Transportroboters einfahren und damit den Pflanzbehälter untergreifen.

Bei einer bevorzugten Ausführungsform weist eine Regalreihe mehrere Regallagerplätze in x- und y-Richtung auf, wobei sich die Höhe der einzelnen Regallagerplätze in y-Richtung, d.h. in vertikaler Richtung unterscheiden. Vorzugsweise sind die Regallagerplätze im Bodenbereich geringer ausgebildet, als die Regallagerplätze im Deckenbereich.

Bei einer bevorzugten Ausführungsform besteht eine Regalreihe aus einer Anzahl an 10 Regallagerplätzen in y-Richtung und einer Anzahl an 20 Regallagerplätzen in x-Richtung.

Unter einem Transportroboter wird allgemein ein Unstetigförderer verstanden. Dies kann beispielsweise ein Regalbediengerät oder ein fahrerloses Transportsystem (FTS) sein. Vorzugsweise ist der Transportroboter wie in der DE 10 2017 121 638 A1 ausgebildet.

Der Transportroboter weist eine Ladeplattform auf, die in vertikaler Richtung heb- und senkbar ist. Die angetriebene Ladeplattform des Transportroboters ist mithilfe von in der Länge veränderbar angetriebenen Hubbändern vertikal beweglich. Je nach der Auszugslänge der Hubbänder können dabei mehrere fluchtend untereinander angeordnete Regallagerplätze in einem Regallager bedient werden, ohne dass der Transportroboter seine Stellung auf der Schienenbahn verändert.

Die Ladeplattform weist einen Teleskop-Schlitten mit zwei beabstandeten Ladegabeln auf, welchen den abgestellten Pflanzbehälter unterfahren und auf die Ladeebene der Ladeplattform ziehen. Der Transportroboter kann dann mit dem aufgeladenen Pflanzbehälter zu einem anderen Regallagerplatz fahren, die Ladegabeln des Teleskopschlittens in Gegenüberstellung zu dem weiteren Regallagerplatz bringen und durch einen Längsantrieb des Teleskopschlittens den auf der Ladeplattform aufgeladene Pflanzbehälter auf einem anderen Regallagerplatz abstellen.

Der Transportroboter fährt auf einer Schienenbahn, welche aus zwei beabstandeten Schienensträngen besteht, welche im deckenseitigen Bereich jeder Regalgasse angeordnet sind. Dies bedeutet, dass jede Regalgasse im deckenseitigen Bereich eine Schienenbahn aufweist, welche von dem Transportroboter genutzt wird. Dies hat einen wesentlichen Vorteil, denn während der Aufzucht der Pflanzen befindet sich häufig Feuchtigkeit am Boden des Regallagers. Die bodenseitigen Regalbediengeräte würden somit ständig durch Pfützen am Boden fahren. Im Gegensatz hierzu ist der deckseitige, schienengebundene Transportroboter von der Feuchtigkeit am Boden ausreichende beabstandet.

Mit dem schienengebundenen Transportroboter kann gegenüber dem am Boden verfahrbaren Regalbediengerät ein schonender und energieeffizienter Transport der Pflanzbehälter erreicht werden, da der Transportroboter nur ein geringes Eigengewicht aufweist und damit nun eine geringe Massenbewegung stattfindet. Durch das kontrollierte Auf- und Absenken der Hubplattform, sowie das kontrollierte Fahren des Transportroboters auf der Schienenbahn wird ein Herausschwappen der Flüssigkeit im Pflanzbehälter verhindert.

Des Weiteren benötigt der Transportroboter, dessen Schienen im deckenseitigen Bereich der Regalreihen angeordnet sind, keinen Platz am Boden, wodurch die Regalgassen leicht zugänglich sind.

Der Transportroboter ist zwischen zwei Regalreihen angeordnet. Vorzugsweise ist die Ladeplattform des Transportroboters dergestalt ausgebildet, dass die Teleskop-Schlitten zu beiden Seiten die beabstandeten Ladegabel ausfahren kann. Dadurch ist es möglich einen Pflanzbehälter aus dem Regallagerplatz einer ersten Regalreihe zu entnehmen und in einen Regallagerplatz der gegenüberliegenden zweiten Regalreihe abzusetzen. Dadurch wird ein schneller Umsatz der Pflanzbehälter erreicht.

Ein weiterer Vorteil des schienengebundenen Transportroboters ist die einfache Anpassung bei einer modularen Erweiterung des Hochregallagers, denn bei einer Verlängerung der Regalreihe muss einfach im deckennahen Bereich die Schienenbahn ebenfalls verlängert werden und die Steuerung des Transportroboters an die neue Länge der Regalreihe angepasst werden. Es ist ferner möglich, dass auf einer Schienenbahn mindestens ein weiterer Transportroboter eingesetzt wird, wodurch sich bei einer relativ langen Schienenbahn die Fahrwege deutlich reduzieren.

Bei einer bevorzugten Ausführungsform führt der schienengebundene Transportroboter eine Reinigung bzw. Desinfektion des Hochregallagers bzw. der Regallagerplätze durch. Der Transportroboter weist hierfür mindestens eine Düse, über welche ein Reinigungsschaum und/oder Wasser an die Regallagerplätze abgegeben wird. Der Schaum bzw. der Wasser erhält der Transportroboter entweder von einem mitgeführten Behälter oder über eine Schlauchverbindung.

Bei einer weiteren bevorzugten Ausführungsform weist das Regallager unterschiedliche Klimazonen auf. So können bestimmten Regalebenen oder Regalreihen gezielt kalte oder warme Luft zugeführt werden. Beispielsweise wird im oberen Bereich bei den Tagplätzen wärmere Luft und im unteren Bereich bei den Nachtplätzen kältere Luft zugeführt. Vorzugsweise wird bei den Nachtplätzen Kaltluft benötigt, während bei den Tagplätzen eher wärmere Luft benötigt wird, um das Wachstum der Pflanzen zu fördern.

Die Zufuhr der klimatisierten Luft erfolgt bei den Regallagerplätzen durch mindestens einen Luftkanal oder eine kanalartige Abdeckung an der Rückwand über einfache Ausnehmungen. Es ist jedoch auch möglich, dass bei einer besonderen Ausführungsform hierfür eine gesteuerte Klappensteuerung vorhanden ist.

Bei einer weiteren, bevorzugten Ausführungsform erfolgt die klimatisierte Zuluft über Kanäle in die einzelnen Regalfächer. Die Abluft wird dann über mindestens einen Lüftungskanal im Deckenbereich aus der Regalreihe bzw. dem Hochregallager abgesaugt.

Bei einer weiteren Ausführungsform werden gezielt die Möglichkeiten mit Tag- und Nachtplätzen bzw. Warm- und Kaltplätzen ausgenutzt. Beispielsweise wird an einem warmen Wochenende mehr Pflanzen für einen Salat benötigt, da erfahrungsgemäß an solchen Wochenenden die Nachfrage nach Salat steigt. Im Regallager werden nun mehr Pflanzbehälter ausgehend von den Nachtplätzen in die Tagplätze umgesetzt, um das Wachstum der Pflanzen in den Pflanzbehältern zu beschleunigen. Genauso ist es auch möglich, dass das Wachstum reduziert wird, indem die Pflanzen ausgehend von den hellen TagPlätzen in die Nachtplätze umgesetzt werden, um somit eine Verzögerung des Wachstums zu erreichen, damit die Pflanzen zwar weiterwachsen, jedoch langsamer. Eine Reduzierung des Wachstums der Pflanzen kann ferner auch durch eine Reduzierung der Temperatur bei den Tagplätzen erreicht werden.

Vorzugsweise weist der Transportroboter eine Analyseeinheit auf, mit welcher anhand der elektrischen Leitfähigkeit der Grad bzw. Anteil an Nährstoffen in dem Wassergemisch im Boden des Pflanzbehälters bestimmt wird. Es ist ferner der pH-Wert, sowie der Sauerstoffgehalt bestimmbar. Des Weiteren wird der Füllstand der Nährstofflösung über einen Füllstandssensor bzw.

Abstandssensor gemessen. Auf Basis dieser Werte ermittelt der Transportroboter, ob ein Nachfüllen der Flüssigkeit im Pflanzbehälter notwendig ist. Sollte eine Notwendigkeit bestehen, so fährt der Transportroboter den Pflanzbehälter zu einer Nachfüllstation. Die Messungen können entweder im Rahmen eines Umsetzvorganges des Pflanzbehälters erfolgen oder durch das gezielte Herausnehmen eines Pflanzbehälters aus einem Regallagerplatz.

Nach der Ernte der Pflanzen wird die Nährstofflösung nicht weggeschüttet, sondern aufbereitet. Hierfür fährt der Transportroboter den Pflanzbehälter an eine eigene Aufbereitungsstation, wo die Nährstofflösung entnommen wird und dem Kreislauf wieder zu geführt wird.

Wesentlicher Vorteil der erfindungsgemäßen Ausführungsform ist, dass die Regallagerplätze relativ schlicht ausgebildet sind, da alle besonderen Vorgänge während des Wachstums (Nachfüllen der Nährstofflösung, Analyse und dergleichen) entweder mit dem Transportroboter oder in einer speziell hierfür vorgesehenen Station durchgeführt werden.

Bei einer weiteren bevorzugten Ausführungsform wird der Transportroboter mit einer Software und einer Prioritätsliste gesteuert. Die Software entscheidet beispielsweise, welche Pflanzen dringend geerntet werden müssen. Wenn sich die Pflanzen noch in der Wachstumsphase befinden, so werden die Pflanzbehälter mit den immer größer werdenden Pflanzen in andere Regallagerplätze umgesetzt, um mehr Platz für die Pflanzen zu erreichen. Durch die Prioritätsliste ist es möglich, dass Leerfahrten reduziert werden, wobei beispielsweise der Transportroboter an der Rückfahrt bereits einen bestimmten Pflanzbehälter mitnimmt, diesen jedoch nicht in den Ziel-Regallagerplatz einlagert, weil dieser aktuell noch besetzt ist. Der Pflanzbehälter wird somit Zwischengelagert bis der endgültige Regallagerplatz frei ist.

Des Weiteren kann die Software abwägen, wenn beispielsweise 80% der Pflanzen gut ausgebildet sind und 20% schadhaft. In diesem Fall würde dann die Software den Pflanzbehälter weiterhin in dem Regallager belassen, so dass die 80% Pflanzen bis zum Erntestadium weiterwachsen. Auf der anderen Seite ist es auch möglich, dass wenn 80% schadhafte Pflanzen vorhanden sind, dass dann der Transportroboter einen solchen Pflanzbehälter aussortiert, da die Energiekosten und der Aufwand für 20% der wachstumsfähigen Pflanzen zu hoch ist.

Bei einer weiteren bevorzugten Ausführungsform kann beispielsweise ein Aussortieren der schadhaften Pflanzen bei der Umsetzstation erfolgen, wobei dann die schadhaften Pflanzen aussortiert werden und die guten Pflanzen in einem neuen Pflanzbehälter mit anderen Pflanzen von einem zweiten Pflanzbehälter kombiniert werden.

Bei der vorliegenden Vorrichtung kann ferner ein Pflanzbehälter mit einer faltbaren Pflanzfläche eingesetzt werden, wie er mit der DE 10 2021 107 313 A1 offenbart wird.

Mit der vorliegenden Patentanmeldung wird zusätzlich ein Verfahren zur Aufzucht von Pflanzen in Pflanzbehältern beansprucht.

Wesentliches Merkmal des Verfahrens ist, dass die Regallagerplätze als Tagplätze und Nachtplätze ausgebildet sind, wobei nur die Tagplätze mindestens eine Lichtquelle aufweisen und dass die Höhe der Nachtplätze geringer als die Höhe der Tagplätze und dass ein Transportroboter die Pflanzbehälter in Abhängigkeit von dem Tag- und Nachtrhythmus der Pflanzen ausgehend von den Tagplätzen zu den Nachtplätzen und umgekehrt bringt.

Bezüglich des Verfahrens wird angemerkt, dass Versuche gezeigt haben, dass es deutlich günstiger ist den Transportroboter permanent die einzelnen Pflanzbehälter zwischen den Tag- und Nachtplätzen zu verfahren, als jeden Regallagerplatz mit einer eigenen Lichtquelle auszustatten und diese zu betreiben.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von mehreren Ausführungswegen darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: einen schienengebundenen Transportroboter gemäß dem Stand der Technik
- Figur 2:: ein Regallager mit einem schienengebundenen Transportroboter gemäß dem Stand der Technik
- Figur 3:: perspektivische Darstellung einer Regalreihe des Regallagers mit unterschiedlichen Tag- und Nachtplätzen
- Figur 4:: Detailansicht des Regallagers mit unterschiedlichen Tag- und Nachtplätzen
- Figur 5:: Draufsicht auf das Regallager mit einem Transportroboter
- Figur 6:: Detailansicht eines Regallagerplatzes
- Figur 7:: perspektivische Darstellung des Regallagers mit schematischer Darstellung der Klimatisierungsvorrichtung
- Figur 8:: schematische Darstellung eines Ablaufs eines Analysevorganges mit einer Analysestation

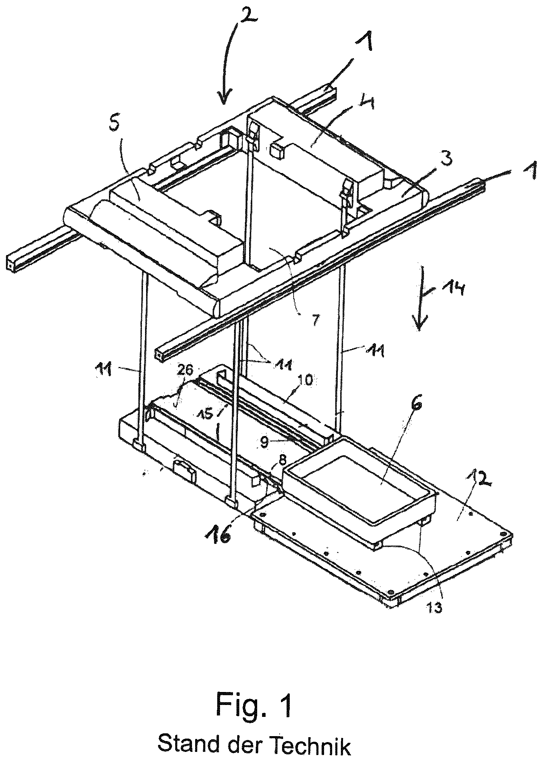

Mit der Figur 1 wird ein Transportroboter 1 gemäß dem Stand der Technik gezeigt. Bei dem Transportroboter 1 handelt es sich um einen Transportroboter, wie er mit der DE 10 2017 121 638 A1 offenbart wird.

Der Transportroboter 1 ist in Längsrichtung verfahrbar angetrieben und befindet sich auf einer Schienenbahn 1, die aus zwei zueinander beabstandeten und parallel verlaufenden Profilschienen besteht. Die Antriebsräder sind nicht dargestellt. Der Transportroboter 2 weist ein Gehäuse 3 auf, welches in seinem Mittenbereich eine Ausnehmung 7 aufweist, in der mit Bewegungsspiel eine heb- und senkbar ausgebildete Ladeplattform 10 angeordnet ist.

Es sind zwei einander gegenüberliegende Hubantriebskästen 4, 5 vorgesehen. In jedem Hubantriebskasten 4, 5 ist ein Hubmotor angeordnet, der über einen Antriebsriemen eine Antriebswelle antreibt, die drehfest mit zwei gegenüberliegend angeordneten Wickeltrommeln verbunden ist. Jeweils ein Hubband 11 ist über jede Wickeltrommel gewickelt.

Bei einem synchronen Antrieb der Hubmotoren wird die Ladeplattform 10 gemäß Fig. 1 in vertikaler Richtung in Pfeilrichtung 14 abgesenkt und kann in Gegenüberstellung zu einem Regellagerplatz 12 gebracht werden, der eine horizontale (oder schräg geneigte) Ablageebene ausbildet.

Auf der Ablageebene des Regallagerplatzes 12 sind zwei zueinander parallele Ablagepaneele 13 angeordnet, in deren Hohlprofil die beiden Förderbänder 8, 9 des Längsförderers 15 hineinfahren. Dies erfolgt dadurch, dass gemäß Fig. 1 der Längsförderer 15 zwei zueinander parallele Teleskopschlitten 16 aufweist, welche die wirksame Auszugslänge der Förderbänder 8, 9 um das zwei- oder dreifache vergrößern können.

Gemäß der Figur 1 findet eine seitliche Abladung oder Aufladung eines Pflanzbehälters 6 in einem Regallagerplatz 12 statt. Es ist erkennbar, dass die Ladeplattform 10 auf die Ablageebene des Regallagerplatzes 12 abgesenkt ist und die Förderbänder 8, 9, die in einem verschiebbar angetriebenen Längsförderer angeordnet sind, in die auf dem Regallagerplatz 12 angeordneten Ablagepaneele 13 hinein fahrbar sind, wobei die beiden Förderbänder 8, 9 den Pflanzbehälter 6 bodenseitig untergreifen.

Der Längsförderer 15 ist bevorzugt ein Teleskopschlitten 16, der mit teleskopartig ausfahrbaren förderbandartigen Ladegabeln in der Lage ist, in seitlicher horizontaler Richtung über den Außenumriss der Ladeplattform 10 hinaus fahren zu können, um ein neben der Ladeplattform 10 auf einem Regallagerplatz 12 gelagerten Pflanzbehälter 6 zu unterfahren und aufzunehmen. Dabei sind die teleskopartig ausfahrbaren Ladegabeln als angetriebene Förderbänder 8, 9 ausgebildet, die auf einem Teleskopschlitten 16 angeordnet sind, welche bei ausgefahrenen Teleskopschlitten 16 in der Lage sind, das Ladegut (Pflanzbehälter 6) bodenseitig zu unterfahren und sich an die Bodenseite des Pflanzbehälters 6 anzulegen.

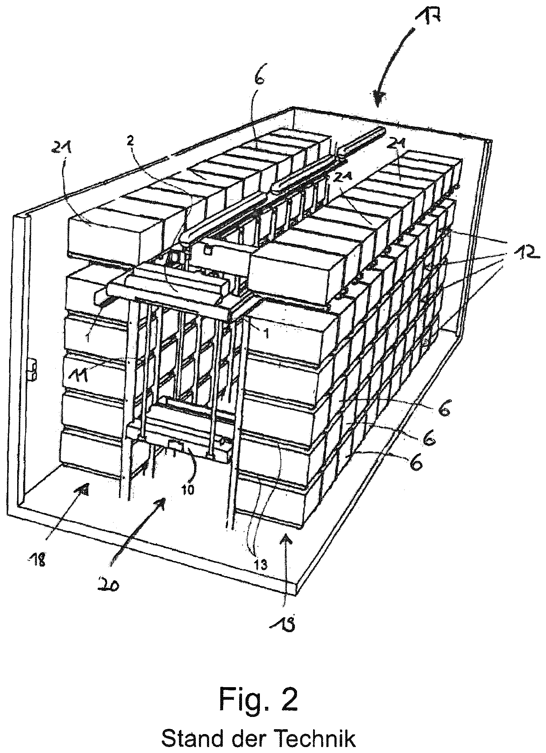

Mit der Figur 2 wird ein Regallager 17 gemäß dem Stand der Technik gezeigt. Das Regallager 17 besteht aus einer ersten Regalreihe 18 und einer zweite Regalreihe 19. Die beiden Regalreihen 18, 19 sind beabstandet voneinander angeordnet, wobei sich dazwischen eine Regalgasse 20 erstreckt. In der Regalgasse 20 ist deckseitig ein Transportroboter 2 angeordnet, welcher auf einer Schienenbahn 1 fährt, wobei eine erste Schiene der ersten Regalreihe 18 und eine zweite Schiene der zweiten Regalreihe 19 zugeordnet ist.

Die Regalreihen 18 und 19 weisen sechs Regalplätze 12 in vertikaler Richtung und elf Regallagerplätze 12 in horizontaler Richtung auf. Alle Regallagerplätze 12 sind gleich groß ausgebildet.

Die Regallagerplätze 12 werden durch Ablagepaneele 13 gebildet, auf welchen die Pflanzbehälter 12 aufliegen, so dass jeder Pflanzbehälter 12 von dem darüber und daneben angeordneten Pflanzbehälter 12 beabstandet ist. Auf diese Weise ergibt sich die Möglichkeit, dass der Transportroboters 2 in der Regalgasse 20 jeden beliebigen Pflanzbehälter 12 in jeder beliebigen Regalreihe 18, 19 und Regalspalte 21 seitlich untergreifen und auf seine Ladeplattform 10 aufladen kann.

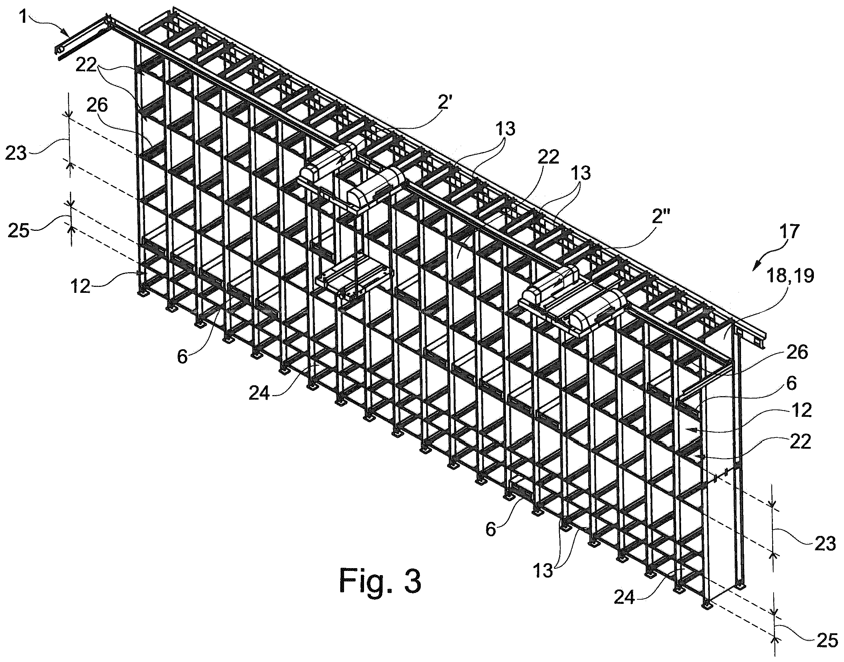

Mit der Figur 3 wird eine Regalreihe 18 des erfindungsgemäßen Regallagers 17 mit den Regallagerplätzen 12 gezeigt, welche als Tagplätze 22 und Nachtplätze 24 ausgebildet sind, wobei in die Regallagerplätze 12 die Pflanzbehälter 6 eingelagert werden.

Im deckenseitigen Bereich weist die Regalreihe 18, 19 einen Schienenstrang auf, welcher Bestand der Schienenbahn 1 für den Transportroboter 2 ist. Gemäß der Figur 3 befinden sich zwei Transportroboter 2', 2" auf der Schienenbahn 1, welche auf die einzelnen Regallagerplätze 12 zugreifen.

Die Regallagereihe 18, 19 weist zwei verschiedene Regallagerplätze 12 mit unterschiedlichen Höhen auf, wobei die Tagplätze 22 eine erste Höhe 23 aufweisen, welche höher als die zweite Höhe 25 der Nachtplätze 24 ist.

Die Tagplätze 22 sind somit gegenüber den Nachtplätze 24 höher ausgebildet. Zusätzlich weisen die Tagplätze 22 jeweils eine Lichtquelle 26 auf, um das Wachstum der Pflanzen in dem Pflanzbehältern 6 zu fördern bzw. zu unterstützen. Die Lichtquelle 26 ist vorzugsweise an der Unterseite des darüberliegenden Regallagerplatzes 12 angeordnet und scheint auf den darunterliegenden, eingelagerten Pflanzbehälter 6. Gemäß der Figur 3 besteht der Boden des Regallagerplatzes 12 aus zwei beabstandeten, schienenartigen Ablagepanellen 13.

Die Lichtquelle 26 des Regallagerplatzes 12 besteht aus zwei beabstandeten Lichtleisten, welche an den Unterseiten der beabstandeten Ablagepanellen 13 angeordnet sind.

Bei einer besonderen nicht-dargestellten Ausführungsform weisen die Tagplätze 22 untereinander verschiedene Höhen 23auf, wodurch ein unterschiedlicher Abstand zwischen den eingelagerten Pflanzbehältern 6 und der darüber angeordneten Lichtquelle 26 erreicht wird. Dies wird während des Wachstumsphase gezielt ausgenutzt, um den Abstand zwischen der Pflanze und der Lichtquelle optimal zu steuern.

Die Nachtplätze 24 sind einfacher aufgebaut und weisen gegenüber den Tagplätzen 22 eine geringere Höhe 25 auf, da der Platz für die Lichtquelle 26 und der Abstand zwischen den Pflanzen und der Lichtquelle 26 eingespart wird. Durch die geringere Höhe 25 der Nachtplätze 24 kann über die gesamte Höhe der Regalreihe 18, 19 weiterer Platz eingespart werden, wodurch mehr Regallagerplätze 12 für die Pflanzbehälter 6 zur Verfügung stehen.

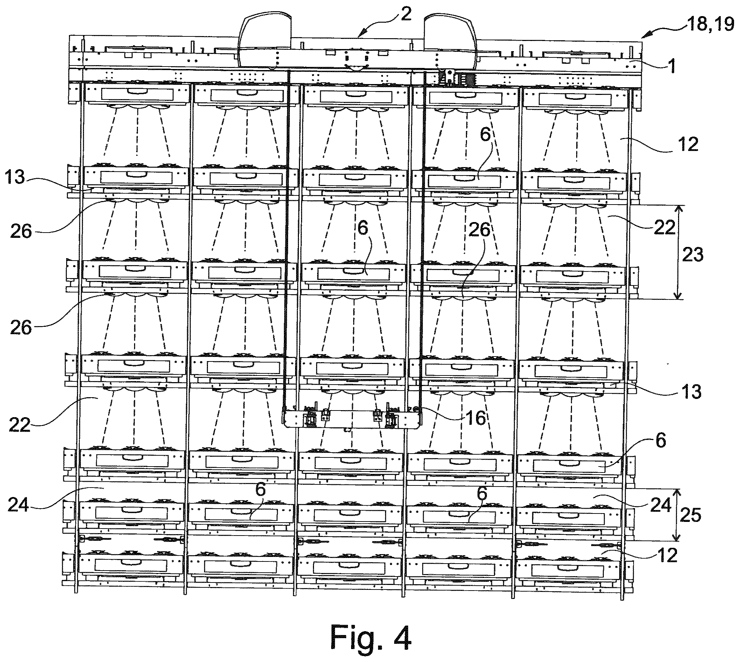

Figur 4 zeigt einen Detailausschnitt einer Regalreihe 18, 19 des Regallagers 17. An der Deckenseite der Regalreihe 18, 19 befindet sich der Transportroboter 2 auf einer Schienenbahn 1.

Im oberen Bereich der Regalreihe 18, 19 befinden sich die Tagplätze 22 mit einer Höhe 23. Im unteren Bereich der Regalreihe 18, 19 befinden sich die Nachtplätze 24 mit einer Höhe 25. Die Höhen 23, 25 unterscheiden sich, wobei die Höhe 23 der Tagplätze 22 höher ist, als die Höhe 25 der Nachtplätze 24.

Jeder Regallagerplatz 12 weist eine Ablagepanelle 13 zum Ablegen und eines Pflanzbehälters 6 auf.

Die Tagplätze 22 weisen jeweils eine deckenseitige Lichtquelle 26 auf. Vorzugsweise ist die Lichtquelle 26 permanent angeschaltet, wodurch keine aufwändige Steuerung notwendig ist. Die Nachtplätze 24 weisen keine Lichtquelle 26 auf, wodurch diese deutlich günstiger sind. Um den geforderten Tag-Nachtrhythmus für die Pflanzen in den Pflanzbehältern 6 zu erreichen, werden die einzelnen Pflanzbehälter 6 in bestimmten Zeitabständen mit dem Transportroboter 2 ausgehend von den Tagplätzen 22 zu den Nachtplätzen 24 und umgekehrt eingelagert.

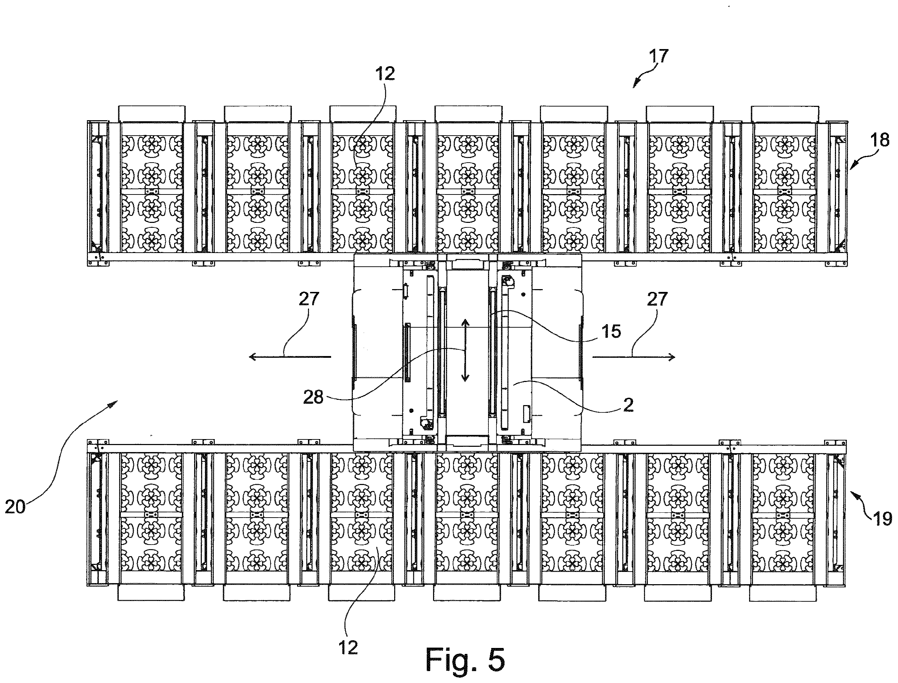

Figur 5 zeigt das Regallager 17 in einer Draufsicht. Das Regallager 17 besteht aus zwei beabstandeten Regalreihen 18, 19 zwischen welchen sich eine Regalgasse 20 erstreckt. In der Regalgasse 20 ist deckenseitig der Transportroboter 2 angeordnet, welcher in Pfeilrichtung 27 verfahrbar ist und mit seinem Längsförderer 15 in Pfeilrichtung 28 auf die einzelnen Regallagerplätze 12 der beiden Regallagerreihen 18, 19 zugreift.

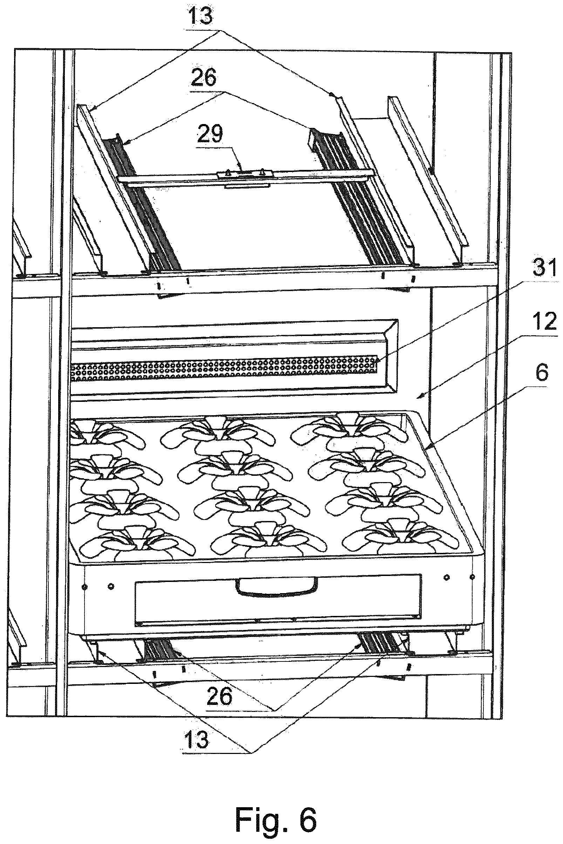

Mit der Figur 6 wird ein Regallagerplatz 12 des Regallagers 17 gezeigt. Der Regallagerplatz 12 weist zwei beabstandete, parallele Ablagepanelle 13 auf, welche auf der Pflanzbehälter 6 abgestellt wird. Die Ablagepanelle 13 für den Pflanzbehälter 6 bilden jeweils ein Hohlprofil aus, in das die Förderbänder 8, 9 des Längsförderers 15 längsverschiebbar eingreifen und die Bodenseite des Pflanzbehälters 6 untergreifen.

Die beiden Ablagepanelle 13 sind mit einem mittigen Querträger verbunden, welche eine Medienkupplung 29 aufweist. Vorzugweise handelt es sich bei der Medienkupplung 29 um eine Energiequelle für einen Zerstäuber, welcher die Nährstofflösung in dem darüberliegenden Pflanzbehälter 6 zerstäubt, damit die Nährstoffe besseren von den Pflanzen des Pflanzbehälters 6 aufgenommen werden können.

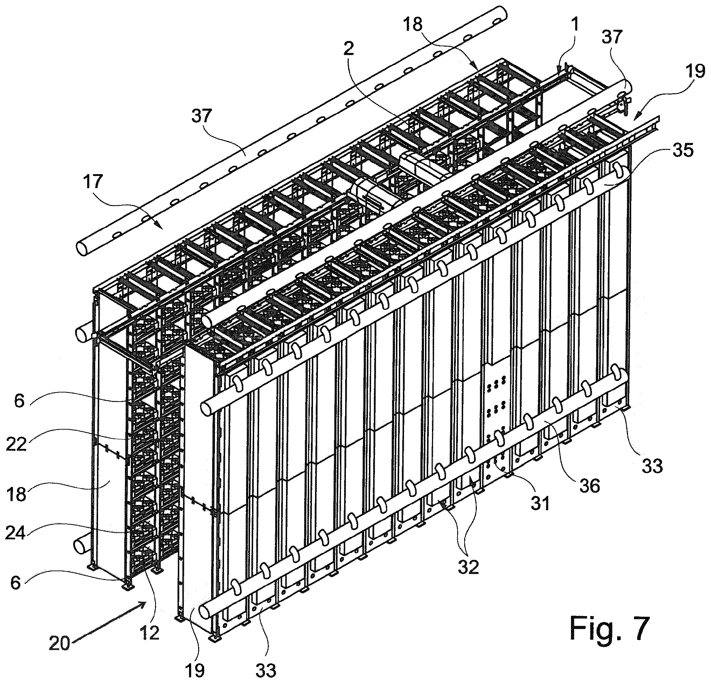

Figur 7 zeigt das Regallager 12 in einer perspektivischen Darstellung. Die beiden Regalreihen 18, 19 sind parallel und beabstandet voneinander angeordnet, wobei zwischen den Regalreihen 18, 19 die Regalgasse 20 ist, innerhalb welcher der Transportroboter 2 agiert.

Die Klimatisierung der Regallagerplätze 12 erfolgt über eine zentrale Klimatisierungseinheit, welche über Lüftungskanäle und Ausnehmungen 31 in den Rückwänden der Regallagerplätzen 12 die klimatisierte Luft an die Pflanzen der eingelagerten Pflanzbehälter 6 abgibt. Auf der Rückseite der Regalreihen 18, 19 befinden sich hierfür kanalartige Abdeckungen 32, welche die klimatisierte Luft zu den Regallagerplätzen 12 leiten.

Die klimatisierte Luft für Nachtplätze 24 erfolgt über zwei Zuluftkanäle 36. Die klimatisierte Luft für die Tagplätze 22 erfolgt für zwei Zuluftkanäle 35. Vorzugsweise unterscheidet sich die klimatisierte Luft der beiden Luftkanäle 35 und 36 und ist an den jeweiligen Tag- Nachtzyklus der Pflanzen in den Pflanzbehältern 6 angepasst. Die gesamte Luft wird dann wieder über mindestens eine deckseitige Luftabsaugung 37 aus dem Regallager 17 abgesaugt.

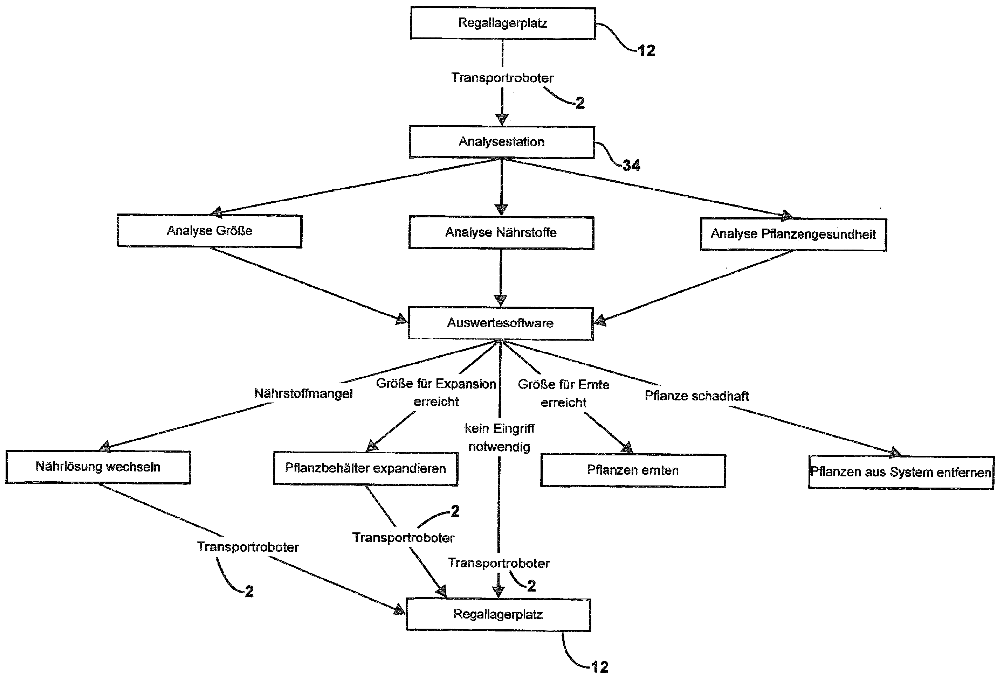

Mit der Figur 8 wird schematisch der Ablauf eines Analysevorganges mit einer Analysestation 34 gezeigt. Der Transportroboter 2 holt zunächst aus einem Regallagerplatz 12 einen Pflanzbehälter 6 mit Pflanzen und bringt diesen zu der Analysestation 34. Die Analysestation 34 führt eine Analyse hinsichtlich der Gesundheit der Pflanzen, eine Analyse hinsichtlich der Nährstoffe und eine Analyse hinsichtlich der Größe der Pflanzen durch.

Bei der Analyse der Gesundheit wird eine schadhafte Pflanze aussortiert und aus dem System bzw. dem Regallager 17 entfernt. Sind die Pflanzen in Ordnung, so bringt der Transportroboter 2 den Pflanzbehälter 6 wieder zu einem Regallagerplatz 12.

Bei der Analyse der Nährstoffe werden bei einem Nährstoffmangel weitere Nährstoffe zugeführt. Sind die Pflanzen ausreichend mit Nährstoffen versorgt, so bringt der Transportroboter 2 den Pflanzbehälter 6 wieder zu einem Regallagerplatz 12.

Bei der Analyse der Größe wird entschieden, ob die Pflanzen schon die ausreichende Größe für die Ernte haben. Sind die Pflanzen erntereif, so bringt der Transportroboter 2 den Pflanzbehälter 6 zu einer Erntestation. Ansonsten wird der Pflanzbehälter wieder zu einem Regallagerplatz 12 gebracht.

Die Pflanzen befinden sich in einem Pflanzeinsatz mit einer faltbaren Pflanzfläche, welcher vorzugsweise expandierbar ausgebildet ist. Unter einem expandierbaren Pflanzeinsatz wird ein faltenförmiger Pflanzeinsatz verstanden, welcher auseinanderziehbar ist. Durch das Auseinanderziehen wird der Abstand zwischen den Pflanzen vergrößert, so dass diese mehr Platz während der Wachstumsphase haben. Gleichzeitig wird durch das Auseinanderziehen der Abstand zwischen der Pflanzfläche und dem Pflanzbehälterboden erhöht. Vorzugsweise werden mindestens zwei Pflanzeinsätze in einen ersten Pflanzbehälter 6 eingehängt. Sobald die Pflanzen eine gewisse Größe erreicht haben, wird ein Pflanzeinsatz aus dem ersten Pflanzbehälter 6 entnommen, auseinandergezogen und in einen zweiten Pflanzbehälter 6 eingehängt. Der verbleibend Pflanzeinsatz wird in dem ersten Pflanzbehälter ebenfalls auseinandergezogen. Während der Wachstumsphase findet somit ein Aufteilen von Pflanzeinsätzen auf mehrere Pflanzbehälter statt, welche im Rahmen des Aufteilvorganges gleichzeitig auseinandergezogen (=expandiert) werden. Nach dem Aufteil- und Expandiervorgang werden die einzelnen Pflanzbehälter 6 dann wieder mit einem Transportroboter 2 zu den Regallagerplätze 12 gebracht.

### Zeichnungslegende

- 1.: Schienenbahn
- 2.: Transportroboter
- 3.: Gehäuse
- 4.: Hubantriebskasten
- 5.: Hubantriebskasten
- 6.: Pflanzbehälter
- 7.: Ausnehmung (von 2)
- 8.: Förderband
- 9.: Förderband
- 10.: Ladplattform
- 11.: Hubband
- 12.: Regallagerplatz
- 13.: Ablagepanelle
- 14.: Pfeilrichtung
- 15.: Längsförderer
- 16.: Teleskopschlitten
- 17.: Regallager
- 18.: Regalreihe (links)
- 19.: Regalreihe (rechts)
- 20.: Regalgasse (mitte)
- 21.: Regalspalte
- 22.: Tagplatz
- 23.: Höhe von 22
- 24.: Nachtplatz
- 25.: Höhe von 24
- 26.: Lichtquelle
- 27.: Pfeilrichtung von 2
- 28.: Pfeilrichtung von 15
- 29.: Medienkupplung
- 30.: Netzteil von 26
- 31.: Ausnehmung
- 32.: Abdeckung von 31
- 33.: Rückwand von 18, 19
- 34.: Analysestation
- 35.: Zuluftkanal für 22
- 36.: Zuluftkanal für 24
- 37.: Luftabsaugung

## Patentansprüche

1. Vorrichtung zur Aufzucht von Pflanzen in Pflanzbehältern (6), bestehend aus einem Regallager (17) und mindestens einem schienengebundenen Transportroboter (2, 2', 2"), wobei das Regallager (17) mindestens eine erste Regalreihe (18) mit Regallagerplätzen (12) für Pflanzbehälter (6) und mindestens eine beabstandete, zweite Regalreihe (19) mit Regallagerplätzen (12) für Pflanzbehälter (6) aufweist, wobei zwischen den beiden Regalreihen (18, 19) eine Regalgasse (20) besteht, in der deckenseitig der schienengebundene Transportroboter (2) fahrbar angeordnet ist, welcher mit einer heb- und senkbar angetriebenen Ladeplattform (10) und mindestens einem darauf angeordneten Längsförderer (15) mindestens einen Pflanzbehälter (6) die Regallagerplätze (12) ein- oder auslagert, **dadurch gekennzeichnet, dass** die Regallagerplätze (12) als Tagplätze (22) und Nachtplätze (24) ausgebildet sind, wobei nur die Tagplätze (22) mindestens eine Lichtquelle (26) aufweisen und dass die Höhe (25) der Nachtplätze (24) geringer als die Höhe (23) der Tagplätze (22) ist.

2. Vorrichtung nach Anspruch 1, **dadurch gekennzeichnet, dass** in vertikaler Richtung die übereinander angeordneten Regallagerplätze (12) mindestens zwei unterschiedlichen Höhen (23, 25) aufweisen, wobei sich im unteren, bodennahen Bereich die Regallagerplätze (12) mit der geringeren Höhe (25) und sich im deckennahen Bereich die Regallagerplätze mit der höheren Höhe (23) befinden.

3. Vorrichtung nach Anspruch 1 oder 2, **dadurch gekennzeichnet, dass** die Höhen (23) der Tagplätze (22) und die Höhen (25) der Nachtplätze (24) bei der ersten Regalreihe (18) und der zweiten Regalreihe (19) gleich sind.

4. Vorrichtung nach Anspruch 1 oder 2, **dadurch gekennzeichnet, dass** die Höhen (23) der Tagplätze (22) und die Höhen (25) der Nachtplätze (24) bei der ersten Regalreihe (18) und der zweiten Regalreihe (19) unterschiedlich sind.

5. Vorrichtung nach einem der Ansprüche 1 bis 4, **dadurch**
**gekennzeichnet, dass** die Lichtquelle (26) bei den Tagplätzen permanent eingeschaltet ist.

6. Vorrichtung nach einem der Ansprüche 1 bis 5, **dadurch**
**gekennzeichnet, dass** in der Regalgasse (20) deckseitig der Transportroboter (2) angeordnet ist, welcher auf einer Schienenbahn (1) fährt, wobei eine erste Schiene der ersten Regalreihe (18) und eine zweite Schiene der zweiten Regalreihe (19) zugeordnet ist.

7. Vorrichtung nach einem der Ansprüche 1 bis 6, **dadurch**
**gekennzeichnet, dass** der Transportroboter (2) eine Reinigung bzw. Desinfektion des Regallagers (17) und/oder der Regallagerplätze (12) durchführt, wobei der Transportroboter (2) mindestens eine Düse aufweist, über welche ein Reinigungsschaum und/oder Wasser an die Regallagerplätze (12) abgegeben wird.

8. Vorrichtung nach einem der Ansprüche 1 bis 7, **dadurch**
**gekennzeichnet, dass** der Transportroboter (2) mindestens eine Analyseeinheit aufweist, mit welcher anhand der elektrischen Leitfähigkeit der Grad bzw. Anteil an Nährstoffen in dem Wassergemisch im Boden des Pflanzbehälters (6) bestimmbar ist.

9. Vorrichtung nach einem der Ansprüche 1 bis 8, **dadurch**
**gekennzeichnet, dass** die Klimatisierung des Regallagers (12) über eine Rückwand (33) der Regalreihe (18, 19) erfolgt, wobei die klimatisierte Luft über kanalartige Abdeckungen (32) entlang der Rückwand (33) geleitet wird und durch Ausnehmungen (31) in der Rückwand zu dem Regallagerplatz (12) gelangt.

10. Vorrichtung nach einem der Ansprüche 1 bis 9, **dadurch gekennzeichnet, dass** das Regallager (17) unterschiedliche Klimazonen aufweist, wobei im oberen Bereich bei den Tagplätzen (22) wärmere Luft und im unteren Bereich bei den Nachtplätzen kältere Luft zugeführt wird.

11. Vorrichtung nach einem der Ansprüche 1 bis 10, **dadurch**
**gekennzeichnet, dass** die Zufuhr der klimatisierten Luft für Nachtplätze (24) über Zuluftkanäle (36) und die Zufuhr der klimatisierten Luft für die Tagplätze (22) über Zuluftkanäle (35) erfolgt und die Abfuhr der gesamten Luft über mindestens eine deckseitige Luftabsaugung (37) aus dem Regallager (17) erfolgt.

12. Vorrichtung nach einem der Ansprüche 1 bis 11, **dadurch**
**gekennzeichnet, dass** mindestens ein Regallagerplatz (12) eine Medienkupplung (29) aufweist, welche Energie für einen Zerstäuber bereitstellt, welcher eine Nährstofflösung in dem Pflanzbehälter (6) zerstäubt.

13. Vorrichtung nach einem der Ansprüche 1 bis 12, **dadurch**
**gekennzeichnet, dass** das Regallager (17) als Hochregallager ausgebildet ist und dass die Regalreihen (18, 19) mit den Regallagerplätzen (12) als Metallregale ausgebildet sind.

14. Vorrichtung nach einem der Ansprüche 1 bis 13, **dadurch**
**gekennzeichnet, dass** der Regallagerplatz (12) zwei zueinander parallele Ablagepaneele (13) aufweist, in deren Hohlprofil zwei Förderbänder (8, 9) des Längsförderers (15) des Transportroboters (2) hineinfahren und den Pflanzbehälter (6) bodenseitig untergreifen.

15. Verfahren zur Aufzucht von Pflanzen in Pflanzbehältern (6), bestehend aus einem Regallager (17) und mindestens einem schienengebundenen Transportroboter (2), wobei das Regallager (17) mindestens eine erste Regalreihe (18) mit Regallagerplätzen (12) für Pflanzbehälter (6) und mindestens eine beabstandete, zweite Regalreihe (19) mit Regallagerplätzen (12) für Pflanzbehälter (6) aufweist, wobei zwischen den beiden Regalreihen (18, 19) eine Regalgasse (20) besteht, in der deckenseitig der schienengebundene Transportroboter (2) fahrbar angeordnet ist, welcher mit einer heb- und senkbar angetriebenen Ladeplattform (10) und mindestens einem darauf angeordneten Längsförderer (15) mindestens einen Pflanzbehälter (6) in mindestens einen Regallagerplatz (12) ein- oder auslagert, **dadurch gekennzeichnet, dass** die Regallagerplätze (12) als Tagplätze (22) und Nachtplätze (24) ausgebildet sind, wobei nur die Tagplätze (22) mindestens eine Lichtquelle (26) aufweisen und dass die Höhe (25) der Nachtplätze (24) geringer als die Höhe (23) der Tagplätze (22) ist und dass der Transportroboter (2) die Pflanzbehälter (6) in Abhängigkeit von dem Tag- und Nachtrhythmus der Pflanzen ausgehend von den Tagplätzen (22) zu den Nachtplätzen (24) und umgekehrt bringt.

## Claims

1. A device for growing plants in plant containers (6), consisting of a shelf storage system (17) and at least one rail-bound transport robot (2, 2', 2''), wherein the shelf storage system (17) has at least one first row of shelves (18) with shelf storage locations (12) for plant containers (6) and at least one spaced-apart second row of shelves (19) with shelf storage locations (12) for plant containers (6), wherein between the two rows of shelves (18, 19) there is a shelf aisle (20) in which the rail-bound transport robot (2) is movably arranged on the ceiling side, which stores at least one plant container (6) in or removes it from the shelf storage locations (12) by means of a loading platform (10) that can be driven in a lifting and lowering movement and at least one longitudinal conveyor (15) disposed thereon, **characterised in that** the shelf storage locations (12) are designed as daytime locations (22) and nighttime locations (24), wherein only the daytime locations (22) have at least one light source (26), and **in that** the height (25) of the nighttime locations (24) is less than the height (23) of the daytime locations (22).

2. The device according to claim 1, **characterised in that**, in the vertical direction, the shelf storage locations (12) arranged one above the other have at least two different heights (23, 25), wherein the shelf storage locations (12) with the lower height (25) are located in the lower area close to the floor and the shelf storage locations with the greater height (23) are located in the area close to the ceiling.

3. The device according to claim 1 or 2, **characterised in that** the heights (23) of the daytime locations (22) and the heights (25) of the nighttime locations (24) are the same in the first shelf row (18) and the second shelf row (19).

4. The device according to claim 1 or 2, **characterised in that** the heights (23) of the daytime locations (22) and the heights (25) of the nighttime locations (24) are different in the first row of shelves (18) and the second row of shelves (19).

5. The device according to any one of claims 1 to 4, **characterised in that** the light source (26) is permanently switched on at the daytime locations.

6. The device according to any one of claims 1 to 5, **characterised in that** the transport robot (2) is arranged in the shelf aisle (20) on the ceiling side, which travels on a rail track (1), wherein a first rail is assigned to the first row of shelves (18) and a second rail is assigned to the second row of shelves (19).

7. The device according to any one of claims 1 to 6, **characterised in that** the transport robot (2) performs cleaning or disinfection of the shelf storage system (17) and/or the shelf storage locations (12), wherein the transport robot (2) has at least one nozzle through which cleaning foam and/or water is dispensed to the shelf storage locations (12).

8. The device according to any one of claims 1 to 7, **characterised in that** the transport robot (2) has at least one analysis unit with which the degree or proportion of nutrients in the water mixture in the bottom of the plant container (6) can be determined on the basis of electrical conductivity.

9. The device according to any one of claims 1 to 8, **characterised in that** the climate control of the shelf storage system (12) is carried out via a rear wall (33) of the shelf row (18, 19), wherein the climate-controlled air is guided along the rear wall (33) via channel-like covers (32) and reaches the shelf storage location (12) through recesses (31) in the rear wall.

10. The device according to any one of claims 1 to 9, **characterised in that** the rack storage system (17) has different climate zones, with warmer air being supplied to the upper area near the daytime storage locations (22) and colder air being supplied to the lower area near the nighttime storage locations.

11. The device according to any one of claims 1 to 10, **characterised in that** the supply of climate-controlled air for nighttime locations (24) is supplied via supply air ducts (36) and the supply of climate-controlled air for the daytime locations (22) is supplied via supply air ducts (35), and the entire air is extracted from the rack storage system (17) via at least one ceiling-side air extraction system (37).

12. The device according to any one of claims 1 to 11, **characterised in that** at least one rack storage location (12) has a media coupling (29) that provides energy for an atomizer that atomises a nutrient solution in the plant container (6).

13. The device according to any one of claims 1 to 12, **characterised in that** the shelf storage system (17) is designed as a high-level shelf storage system and **in that** the rows of shelves (18, 19) with the shelf storage locations (12) are designed as metal shelves.

14. The device according to any one of claims 1 to 13, **characterised in that** the shelf storage space (12) has two support panels (13) parallel to each other, into the hollow profile of which two conveyor belts (8, 9) of the longitudinal conveyor (15) of the transport robot (2) move and grip the plant container (6) from below at the bottom.

15. A method for growing plants in plant containers (6), consisting of a shelf storage system (17) and at least one rail-bound transport robot (2), wherein the shelf storage system (17) has at least one first row of shelves (18) with shelf storage locations (12) for plant containers (6) and at least one spaced-apart second row of shelves (19) with shelf storage locations (12) for plant containers (6), wherein between the two rows of shelves (18, 19) there is a rack aisle (20) in which the rail-bound transport robot (2) is arranged in a movable manner on the ceiling side, which stores at least one plant container (6) in or removes it from the shelf storage locations (12) by means of a loading platform (10) that can be driven in a lifting and lowering movement and at least one longitudinal conveyor (15) disposed thereon, **characterised in that** the shelf storage locations (12) are designed as daytime locations (22) and nighttime locations (24), wherein only the daytime locations (22) have at least one light source (26), and **in that** the height (25) of the nighttime locations (24) is less than the height (23) of the daytime locations (22), and **in that** the transport robot (2) moves the plant containers (6) from the daytime locations (22) to the nighttime locations (24) and vice versa, depending on the day and night rhythm of the plants.

## Revendications

1. Dispositif pour la culture de plantes dans des contenants à plantes (6), constitué d'une installation de stockage à rayonnages (17) et d'au moins un robot de transport sur rails (2, 2', 2"), dans lequel l'installation de stockage à rayonnages (17) présente au moins une première rangée de rayonnages (18) avec des emplacements de stockage de rayonnage (12) pour des contenants à plantes (6) et au moins une seconde rangée de rayonnages (19) espacée avec des emplacements de stockage de rayonnage (12) pour des contenants à plantes (6), dans lequel il existe une allée de rayonnage (20) entre les deux rangées de rayonnages (18, 19) dans laquelle le robot de transport sur rails (2) est disposé de manière mobile côté plafond, lequel stocke ou déstocke au moins un contenant à plantes (6) dans les emplacements de stockage de rayonnage (12) avec une plateforme de chargement (10) entraînée en levage et en abaissement et au moins un convoyeur longitudinal (15) disposé dessus, **caractérisé en ce que** les emplacements de stockage de rayonnage (12) sont réalisés en tant qu'emplacements de jour (22) et emplacements de nuit (24), dans lequel seuls les emplacements de jour (22) présentent au moins une source lumineuse (26) et que la hauteur (25) des emplacements de nuit (24) est inférieure à la hauteur (23) des emplacements de jour (22).

2. Dispositif selon la revendication 1, **caractérisé en ce que** dans la direction verticale, les emplacements de stockage de rayonnage (12) disposés les uns au-dessus des autres présentent au moins deux hauteurs (23, 25) différentes, dans lequel les emplacements de stockage de rayonnage (12) avec la hauteur inférieure (25) se trouvent dans la zone inférieure proche du sol et les emplacements de stockage de rayonnage avec la hauteur supérieure (23) se trouvent dans la zone proche du plafond.

3. Dispositif selon la revendication 1 ou 2, **caractérisé en ce que** les hauteurs (23) des emplacements de jour (22) et les hauteurs (25) des emplacements de nuit (24) sont identiques pour la première rangée de rayonnages (18) et la seconde rangée de rayonnages (19).

4. Dispositif selon la revendication 1 ou 2, **caractérisé en ce que** les hauteurs (23) des emplacements de jour (22) et les hauteurs (25) des emplacements de nuit (24) sont différentes pour la première rangée de rayonnages (18) et la seconde rangée de rayonnages (19).

5. Dispositif selon l'une des revendications 1 à 4, **caractérisé en ce que** la source lumineuse (26) est allumée en permanence pour les emplacements de jour.

6. Dispositif selon l'une des revendications 1 à 5, **caractérisé en ce que** le robot de transport (2) est disposé dans l'allée de rayonnage (20) côté plafond, lequel se déplace sur une voie à rails (1), dans lequel un premier rail est associé à la première rangée de rayonnages (18) et un second rail à la seconde rangée de rayonnages (19).

7. Dispositif selon l'une des revendications 1 à 6, **caractérisé en ce que** le robot de transport (2) effectue un nettoyage ou une désinfection du stockage de rayonnage (17) et/ou des emplacements de stockage de rayonnage (12), dans lequel le robot de transport (2) présente au moins une buse par laquelle une mousse de nettoyage et/ou de l'eau est délivrée aux emplacements de stockage de rayonnage (12).

8. Dispositif selon l'une des revendications 1 à 7, **caractérisé en ce que** le robot de transport (2) présente au moins une unité d'analyse avec laquelle le degré ou la proportion de nutriments dans le mélange d'eau au fond du contenant à plantes (6) peut être déterminé en fonction de la conductivité électrique.

9. Dispositif selon l'une des revendications 1 à 8, **caractérisé en ce que** la climatisation de l'installation de stockage à rayonnages (12) s'effectue par une paroi arrière (33) de la rangée de rayonnages (18, 19), dans lequel l'air climatisé est acheminé par des recouvrements (32) de type canal le long de la paroi arrière (33) et parvient à l'emplacement de stockage de rayonnage (12) à travers des évidements (31) dans la paroi arrière.

10. Dispositif selon l'une des revendications 1 à 9, **caractérisé en ce que** l'installation de stockage à rayonnages (17) présente des zones climatiques différentes, dans lequel de l'air plus chaud est amené dans la zone supérieure pour les emplacements de jour (22) et de l'air plus froid dans la zone inférieure pour les emplacements de nuit.

11. Dispositif selon l'une des revendications 1 à 10, **caractérisé en ce que** l'amenée d'air climatisé pour les emplacements de nuit (24) s'effectue par des conduits d'arrivée d'air (36) et l'amenée d'air climatisé pour les emplacements de jour (22) par des conduits d'arrivée d'air (35) et l'évacuation de l'ensemble de l'air s'effectue par au moins une aspiration d'air (37) côté plafond à partir de l'installation de stockage à rayonnages (17).

12. Dispositif selon l'une des revendications 1 à 11, **caractérisé en ce qu'au** moins un emplacement de stockage à rayonnage (12) présente un couplage de média (29), lequel fournit de l'énergie à un pulvérisateur qui pulvérise une solution nutritive dans le contenant à plantes (6).

13. Dispositif selon l'une des revendications 1 à 12, **caractérisé en ce que** l'installation de stockage à rayonnages (17) est réalisée en tant que stockage à hauts rayonnages et que les rangées de rayonnages (18, 19) avec les emplacements de stockage de rayonnage (12) sont réalisées en tant que rayonnages métalliques.

14. Dispositif selon l'une des revendications 1 à 13, **caractérisé en ce que** l'emplacement de stockage à rayonnages (12) présente deux panneaux de dépose (13) parallèles, dans le profil creux desquels deux bandes transporteuses (8, 9) du convoyeur longitudinal (15) du robot de transport (2) s'insèrent et enserrent le contenant à plantes (6) par le dessous côté sol.

15. Procédé de culture de plantes dans des contenants à plantes (6), constitué d'une installation de stockage à rayonnages (17) et d'au moins un robot de transport sur rails (2), dans lequel l'installation de stockage à rayonnages (17) présente au moins une première rangée de rayonnages (18) avec des emplacements de stockage de rayonnage (12) pour des contenants à plantes (6) et au moins une seconde rangée de stockages à rayonnages (19) espacée avec des emplacements de stockage de rayonnage (12) pour des contenants à plantes (6), dans lequel il existe une allée de rayonnages (20) entre les deux rangées de rayonnages (18, 19) dans laquelle le robot de transport fixé sur rails (2) est disposé de manière mobile côté plafond, lequel stocke ou déstocke au moins un contenant à plantes (6) dans au moins un emplacement de stockage de rayonnage (12) avec une plateforme de chargement (10) entraînée en levage et en abaissement et au moins un convoyeur longitudinal (15) disposé dessus, **caractérisé en ce que** les emplacements de stockage de rayonnage (12) sont réalisés en tant qu'emplacements de jour (22) et emplacements de nuit (24), dans lequel seuls les emplacements de jour (22) présentent au moins une source lumineuse (26) et que la hauteur (25) des emplacements de nuit (24) est inférieure à la hauteur (23) des emplacements de jour (22) et que le robot de transport (2) amène les contenants à plantes (6) en fonction du rythme diurne et nocturne des plantes en partant des emplacements de jour (22) vers les emplacements de nuit (24) et inversement.
